# EUROPÄISCHE PATENTSCHRIFT

(11) **EP 2 540 647 B1**
(45) Veröffentlichungstag und Bekanntmachung des Hinweises auf die Patenterteilung: **15.10.2014**
(21) Anmeldenummer: 12004887.1
(22) Anmeldetag: 29.06.2012
(51) Int. Cl.: B65G 25/02, B65G 27/12

(54) **Ausbreitungs-Vorrichtung für Anhäufungen von Stoffgemischen**
Spreading device for accumulations of material mixtures
Dispositif d' étalement pour des accumulations de mélanges de substances

(30) Priorität: 29.06.2011 DE 102011107364; 29.06.2011 DE 102011116190
(43) Veröffentlichungstag der Anmeldung: 02.01.2013
(73) Patentinhaber: Stadler Anlagenbau GmbH, 88361 Altshausen (DE)
(72) Erfinder: Sigmund, Ulrich, 88361 Altshausen (DE); König, Corinna, 88361 Altshausen (DE)
(74) Vertreter: Otten, Roth, Dobler & Partner

(56) Entgegenhaltungen:
- EP-A1- 1 618 968
- EP-A1- 1 916 205
- EP-A2- 2 218 662
- DE-A1- 3 829 305
- US-A- 3 776 351

## Beschreibung

Die Erfindung betrifft eine Ausbreitungs-Vorrichtung für Anhäufungen von Stoffgemischen nach dem Oberbegriff des Anspruchs 1.

### Stand der Technik

Die Verarbeitung von Stoffgemischen, insbesondere von Wertstoffen und Stoffgemischen in der Abfallindustrie, stellt aufgrund der üblicherweise auftretenden Portionierung von großen Mengen der anfallenden Stoffgemische, beispielsweise bei der Müllverarbeitung, bei welchem Müll in Containern oder per LKW-Ladungen angeliefert wird, besondere Anforderungen an die Technik zur Handhabung dieser Wertstoffe.

Es ist gängige Praxis, die Verarbeitung und Sortentrennung von Wertstoffgemischen in automatisierten Anlagen auszuführen. Dabei werden diese in Ballen zugeführt oder in Portionen aus Containern oder LKWs abgeladen. Selbes gilt auch für die Beschickung von Umwandlungsanlagen, beispielsweise von Müllverbrennungsanlagen oder Müll-Zerkleinerungsanlagen. Für eine störungsfreie Verarbeitung von Portionen derartiger Stoffgemische in Anlagen mit einer hohen Durchsatzmenge ist es erforderlich, die Portionen zuverlässig und innerhalb eines kurzen Zeitraums flächig auszubreiten, da die Anlagen in der Regel nur einen beschränkten, gegenüber den Portionierungen verringerten Volumendurchsatz pro Zeit ermöglichen.

Eine Ausbreitung der Wertstoff-Portionen wird mit aus dem Stand der Technik bekannten Separatoren ausgeführt, welche einen ersten Prozessschritt einer Verarbeitungs-Anlage für Stoffgemische bilden.

Beispielsweise existieren Anlagen, bei welchen eine Anhäufung auf einem Transportband langsam in Richtung einer drehenden Walze bewegt wird, wobei die Walze ein gegenüber dem Transportband erhöhte Geschwindigkeit aufweist. Die Walze trägt die Anhäufung langsam ab und führt das Material der Anlage zu. Diese Anordnung ist jedoch extrem störungs- und verschleißanfällig, da die Walze das Material von der Anhäufung quasi abschaben muss. Verklemmungen und Beschädigungen sind eine häufige Erscheinung.

Darüber hinaus sind Vorrichtungen mit an Exzeterscheiben aufgehängten Förderleisten bekannt, beispielsweise aus der EP 1 832 352 A1 oder aus der AP 2 258 488 A2, welche mit einer Wippbewegung eine Materialanhäufung bewegen und kleinere Bestandteile aussieben können, ohne die Anhäufung zu auszubreiten.

Derartige Anlagen bieten jedoch meist nur die Möglichkeit einer Siebfunktion oder eines kontinuierlichen Transports, ohne die Anhäufung auszubreiten und einen gleichmäßigen Material-Volumenstrom für eine Weiterverarbeitung bereit zu stellen.

Ausgehend vom genannten Stand der Technik liegt der Erfindung die Aufgabe zu Grunde, eine zuverlässige und einfache Zuführvorrichtung für eine Materialanhäufung bereit zu stellen, welche eine Ausbreitung einer Materialanhäufung zur Beschickung einer Anlage ermöglicht.

Diese Aufgabe wird, ausgehend vom Oberbegriff des Anspruchs 1 durch die kennzeichnenden Merkmale des Anspruchs 1 gelöst.

Vorteilhafte Weiterbildungen sowie zweckmäßige Ausgestaltungen der Erfindung sind in den abhängigen Ansprüchen angegeben.

### Beschreibung der Erfindung

Die erfindungsgemäße Ausbreitungs-Vorrichtung für Anhäufungen von Stoffgemischen umfasst einen Stoff-Eingabebereich und einen Stoff-Ausgabebereich, wobei die Ausbreitungs-Vorrichtung insbesondere für eine Wertstoff-Verarbeitungs-Anlage vorgesehen ist. Sie umfasst weiterhin wenigstens zwei nebeneinander angeordnete, längliche Förderelemente, welche eine Auflagefläche für eine auszubreitende Anhäufung des Stoffgemisches bilden. Sie umfasst weiterhin wenigstens eine, vorzugsweise zwei, darunter angeordnete Exzenterwellen mit darauf angeordneten Exzentern, welche wiederum jeweils in einem Exzenterlager drehend gelagert sind, wobei jedes Exzenterlager mit dem darüber angeordneten Förderelement verbunden ist und wobei die Exzenter in den Exzenterlagern eine Vertikalbeschleunigung in Form einer Auf- und Abwärtsbewegung sowie einen Horizontalversatz in Form einer Hin- und Herbewegung der Fördermittel erzeugen.

Die mittels einer Exzenterwelle derart angetriebenen Förderelemente erzeugen einen Bewegungsablauf, der aufgrund einer jeweils wechselnden Auflage auf dem in Richtung des Ausgabebereichs bewegten Förderelement die Wertstoffe von dem Eingabebereich zum Ausgabebereich der Vorrichtung transportiert.

Die Kinematik des Bewegungsablaufs muss dabei ausreichend große Beschleunigungen aufweisen, dass die Bestandteile des Stoffgemisches zumindest teilweise die Haftung gegenüber den Förderelementen verlieren und eine trägheitskontrollierte Bewegung, beispielsweise eine Wurfbewegung ausführen.

Alternativ, jedoch nach den Gesetzen der Physik vergleichbar ist die Kinematik des Bewegungsablaufs dabei derart gewählt, dass die Bestandteile des Stoffgemisches durch die unterschiedlichen vertikalen Höhen der Förderelemente zwischen den Förderelementen hin und her fallen, ohne eine freie Wurfbewegung nach oben auszuführen. Die Fallstrecke ist damit vergleichbar mit der Wurfhöhe, da in beiden Fällen eine trägheitskontrollierte Bewegung vorliegt.

Der erfindungsgemäße Gedanke liegt darin, dass zwischen mindestens einem Exzenterlager und dem damit verbundenen Förderelement zusätzlich ein Hebelgelenk angeordnet ist.

Das Hebelgelenk ermöglicht eine verbesserte Verteilung einer Anhäufung eines Stoffgemischs auf der Fläche der Förderelemente, da sich aufgrund des Hebelgelenks unterschiedliche Exzentrizitäten an einem vorderen, eingabeseitigen Anlenkpunkt des Förderelementes und einem hinteren, ausgabeseitigen Anlenkpunkt des Förderelements realisieren lassen. Diese unterschiedlichen Exzentrizitäten, von denen auch die erste gleich Null sein kann, bilden eine stetig ansteigende Beschleunigung der Bewegung der Förderelemente und somit eine ansteigende Vorschubgeschwindigkeit in Förderrichtung des Stoffgemisches aus. Bei langsamerer Bewegung erzeugt die stetig ansteigende Hubhöhe der Bewegung der Förderelemente eine anteigende Fallweite zwischen den Förderelementen in Förderrichtung des Stoffgemisches. Durch die starren Förderelemente wären die unterschiedlichen Hübe unterschiedlicher Exzentrizitäten unmöglich. Durch das Hebelgelenk wird ein zusätzlicher Freiheitsgrad zum Parallelversatz durch Verschwenken des Exzenterlagers am Exzenter ermöglicht. Konstruktiv sind dabei beide Exzenterseiten realisierbar.

In einer zweckmäßigen Weiterbildung der erfindungsgemäßen Vorrichtung ist das Hebelgelenk als Hebelgelenk mit einem oberen, an dem Förderelement angeordneten ersten Hebelarm, einem Zwischengelenk und einem an dem Exzenterlager angelenkten oder befestigten, unteren zweiten Hebelarm ausgebildet.

Zwischen dem ersten Hebelarm und dem Förderelement bzw. dem zweiten Hebelarm und dem Exzenterlager werden Anlenkpunkte gebildet, welche zusammen mit dem Zwischengelenk eine umlaufende Drehbewegung der Exzenter im Exzenterlager bei Kompensation des unterschiedlichen Exzenterhubs ermöglichen. Dabei wird durch die Anordnung des Hebelgelenks der Unterschied der Exzentrizitäten kompensiert.

Überdies ist es in einer weiteren Ausgestaltung der Erfindung vorgesehen, dass ein Anlenkpunkt des Hebelgelenkes am Förderelement angeordnet ist und einen ellipsenförmigen Bewegungsverlauf ausführt.

Das Hebelgelenk ist vorzugsweise am ausgabeseitigen Ende des Förderelementes angeordnet, wobei der ellipsenförmige Bewegungsverlauf des Anlenkpunktes eine gegenüber der Horizontalbeschleunigung erhöhte Vertikalbeschleunigung am Förderelement bzw. einen gegenüber dem Horizontalhub erhöhten Vertikalhub am Förderelement bereitstellt.

Es ist in einer überdies weiteren zweckmäßigen Weiterbildung der Erfindung vorgesehen, dass bei einer Anordnung von zwei Exzenterwellen die darauf angeordneten Exzenter einen phasengleichen Drehbewegungsverlauf aufweisen.

Unter einem phasengleichen Drehbewegungsverlauf wird im Sinne der Erfindung eine gleiche Winkellage der jeweils mit einem Förderelement verbundenen Exzenter auf den verschiedenen Exzenterwellen zueinander verstanden.

Aufgrund des phasengleichen Drehbewegungsverlaufs der beiden Exzenterwellen werden unerwünschte Zugspannungen im Förderelement und Lagerbelastungen vermieden.

In einer weiteren Ausgestaltung der Erfindung weisen bei der Anordnung von zwei Exzenterwellen diese eine gleiche Phasenwinkelgeschwindigkeit auf.

Eine gleiche Phasenwinkelgeschwindigkeit wird durch einen an beide Wellen gekoppelten Antrieb oder durch zwei entsprechend synchronisierte Direktantriebe erzeugt. Auf diese Weise wird eine periodische Bewegung der Förderelemente bereitgestellt, welche die Ausbreitung der Anhäufung begünstigt. Zudem können dadurch gegenseitig auftretende Momente kompensiert werden.

Überdies ist es in einer weiteren, zweckmäßigen Ausgestaltung der Erfindung vorgesehen, dass im Stoff-Ausgabebereich durch die Förderelemente ein gegenüber dem Stoff-Eingabebereich vergrößerter Vertikalhub ausgeführt wird, welcher auf das Stoffgemisch eine gegenüber dem Stoff-Eingabe-Bereich erhöhte Vertikalbeschleunigung bzw. Vertikalhub ausübt.

Durch die Anordnung eines Hebelgelenkes an der ausgabeseitigen Exzenterwelle wird im Stoff-Ausgabebereich der Vertikalhub im gestreckten Zustand des Hebelgelenkes gegenüber dem Stoff-Eingabebereich erhöht. Die auf den Förderelementen angeordneten Stoffbestandteile werden aufgrund des vergrößerten Vertikalhubes des Förderelementes einer höheren Beschleunigung bzw. Vertikalbewegung ausgesetzt. Die damit verbundene Wurfweite bzw. Fallweite der Stoffbestandteile wird somit entlang des Förderelements kontinuierlich vergrößert und bewirkt eine aus der Vorwärtsbewegung, insbesonder Vorwärtsbeschleunigung und der Wurfhöhe bzw. Fallweite gebildete stetig steigende Vorschubgeschwindigkeit. Daraus resultiert eine Ausbreitung einer Anhäufung auf den Förderelementen in Richtung des Stoff-Ausgabebereichs.

Überdies ist es in einer zweckmäßigen Ausgestaltung der Erfindung vorgesehen, dass der Vertikalhub im Stoff-Eingabebereich gegenüber dem Vertikalhub im Stoff-AusgabeBereich ein Verhältnis von mindestens 1:2 aufweist.

Aus Versuchen hat sich ergeben, dass durch das Verhältnis der beiden Vertikalhübe von mindestens 1:2 eine gute Ausbreitung einer Anhäufung eines Stoffgemisches erreicht werden kann.

In einer bevorzugten Ausgestaltung der Erfindung ist es vorgesehen, dass die Förderelemente gegenüber einer horizontalen Ebene geneigt sind.

Die Neigung der Förderelemente gegenüber einer horizontalen Ebene kann beispielsweise durch neigen der gesamten Vorrichtung oder durch das Anheben der gesamten Vorrichtung mittels beispielsweise im Stoff-Eingabebereich angeordneter Hubzylinder erreicht werden. Die geneigte Transportfläche der Förderelemente weist den Vorteil auf, dass die auf einem Förderelement angeordneten Stoffpartikel aufgrund des Vertikalhubes in Verbindung mit der geneigten Oberfläche des Förderelementes eine Bewegung ausführen, welche einem schiefen Wurf bzw. dem schrägen Fall entspricht. Dadurch können die Wertstoffpartikel mit einer kontinuierlich entlang der Förderelemente vergrößerten Wurfweite schneller in Richtung des Stoff-Ausgabebereichs der Vorrichtung befördert werden, was zu einer verbesserten Ausbreitung der Anhäufung des Stoffgemisches führt.

Überdies ist es in einer weiteren Ausgestaltung der Erfindung vorgesehen, dass das Förderelement eine gekrümmte Auflagefläche und/oder Durchtrittsöffnungen als Sieb für Kleinpartikel bzw. Flüssigkeiten aufweist.

Durch eine gekrümmte Auflagefläche der Förderelemente kann ebenfalls die Wurfweite bzw. Fallweite (Fallstrecke) innerhalb des Transportweges erreicht werden, was zu einer verbesserten Ausbreitung einer Anhäufung eines Stoffgemisches in Richtung des Stoff-Aufgabebereichs führt.

Darüber hinaus ist es von Vorteil, dass die Auflagefläche Durchtrittsöffnungen aufweist, wodurch kleine Wertstoffpartikel in der Art einer "Vorsortierung" zusätzlich aus dem Förderbereich ausgetragen werden können. Aufgrund der Durchtrittsöffnungen ist es ebenfalls möglich, dass im Stoffgemisch unerwünschte enthaltende Flüssigkeiten abgeführt werden können.

In einer weiteren Ausgestaltung der Erfindung ist vorgesehen, dass das Förderelement einseitig auf einer Wippe gelagert ist. Erfindungsgemäß kann beispielsweise auf der Seite des Stoff-Eingabebereichs der Vorrichtung eine Achse mit einer Lagerung für die Förderelemente ausgebildet sein, welche im Betrieb der Anlage eine wippende Bewegung der Förderelemente zulässt. Dies stellt eine kostengünstige und regelungstechnisch einfache Ausführungsform der Anlage dar.

In einer weiteren Ausgestaltung der Erfindung werden die Exzenterwellen mittels eines gemeinsamen Antriebes oder mittels eines Antriebes je Exzenterwelle angetrieben. Der Antrieb von zwei Exzenterwellen durch einen einzelnen Antrieb kann beispielsweise mittels eines Zahnriemens oder einer Königswelle ausgeführt werden, wodurch die Drehbewegung von der angetriebenen Exzenterwelle auf die anzutreibende Exzenterwelle übertragen wird. Es ist auch ein Antrieb der beiden Exzenterwellen durch ein entsprechendes Getriebe ist möglich.

Darüber hinaus können die beiden Exzenterwellen auch durch zwei getrennte Antriebe, beispielsweise zwei synchronisierte Servomotoren drehend angetrieben werden.

Im folgend gezeigten Ausführungsbeispiel ist eine Ausführungsform der erfindungsgemäßen Vorrichtung dargestellt.

Es zeigen:
- Figur 1: eine anteilige Darstellung einer erfindungsgemäßen Ausbreitungs-Vorrichtung mit zwei Exzenterwellen in perspektivischer Ansicht;
- Figur 2: einen Ausschnitt der Darstellung des Stoff-Eingabebereichs nach Figur 1;
- Figur 3: einen Ausschnitt der Darstellung eines Stoff-Ausgabebereichs gemäß Figur 1;
- Figur 4: eine schematische Darstellung einer Drehbewegung eines Förderelements in Förderichtung;
- Figur 5: eine schematische Darstellung der Kurvenbahnen von zwei Exzentern.

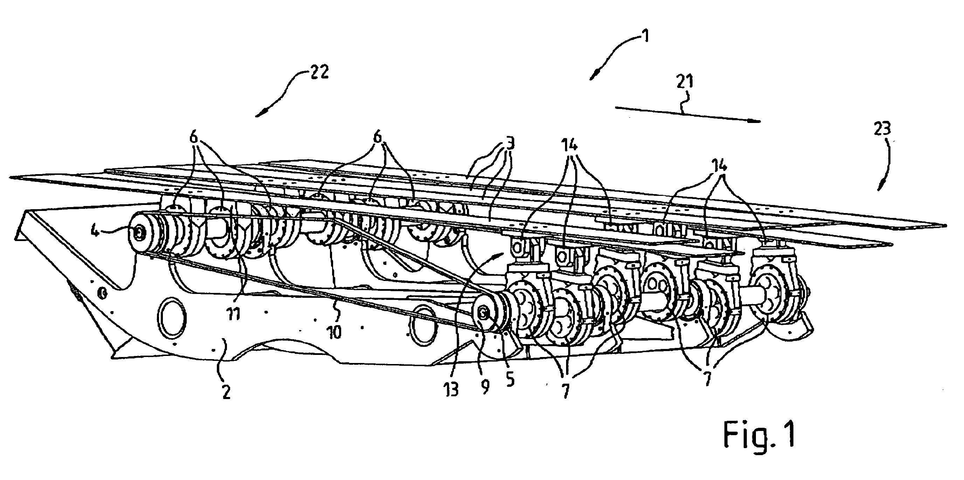

In Figur 1 ist eine anteilige Darstellung der erfindungsgemäßen Ausbreitungs-Vorrichtung 1 in einer perspektivischen Ansicht gezeigt. Gehäusewände, Antriebe sowie weitere Bestandteile, welche erfindungsgemäß nicht weiter gebildet werden, sind vorliegend ausgeblendet. Die Ausbreitungs-vorrichtung 1 umfasst einen Grundrahmen 2, welcher zwei voneinander beabstandete Lageraufnahmen zur Anordnung von je einer Exzenterwelle 4, 5 aufweist. Die Lageraufnahmen verlaufen quer zu einer Förderrichtung 21 eines zu transportierenden Stoffgemisches. In den Lageraufnahmen sind jeweils Exzenterwellen 4 und 5 mittels entsprechenden Drehlagerungen drehend gelagert.

Die Ausbreitungs-Vorrichtung 1 umfasst einen Eingabebereich 22 und einen Ausgabebereich 23, welche zur Zuführung bzw. zur Ausgabe eines Stoffgemisches auf bzw. von den Förderelementen 3 ausgebildet sind. Das Stoffgemisch bzw. die Stoffanhäufung wird auf den Förderelementen 3 in Transportrichtung 21 transportiert.

Die im Abstand zueinander auf der Exzenterwelle 4 angeordneten Exzenter 6 sind in unterschiedlichen Phasenwinkeln auf der Exzenterwelle 4 angeordnet, wodurch ein versetzter Bewegungsablauf von nebeneinander angeordneten Förderelementen 3 gebildet wird.

Die Exzenterwellen 4, 5 weisen mehrere voneinander beabstandete Exzenter 6, 7 auf, wobei je zwei in Gegenüberstellung angeordnete Exzenter 6, 7 ein Exzenterpaar an einem Förderelement 3 bilden.

Die beiden Exzenterwellen 4, 5 werden in dem hier beschriebenen Ausführungsbeispiel mittels eines Zahnriementriebes von einem Antrieb (nicht dargestellt) drehend angetrieben, wobei die Wellenenden der beiden Exzenterwellen 4, 5 jeweils mit einer Zahnriemenscheibe 8, 9 verbunden sind, welche die Drehbewegung des Antriebes auf die beiden Exzenterwellen 4, 5 überträgt. Dadurch erfolgt ein synchronisierter Antrieb der beiden Exzenterwellen 4, 5.

Es ist denkbar, jede Exzenterwelle 4, 5 durch einen separaten Antrieb anzutreiben, wobei der Antrieb ebenfalls, wie bereits beschrieben, synchronisiert ausgeführt wird.

Im Unterschied zum Aufbau des Exzenters 6 im Eingabebereich 22 ist zwischen dem Exzenter 7 und dem jeweiligen Förderelement 3 im Ausgabebereich 23 zusätzlich ein Hebelgelenk 13 angeordnet, welches ein Zwischengelenk aufweist.

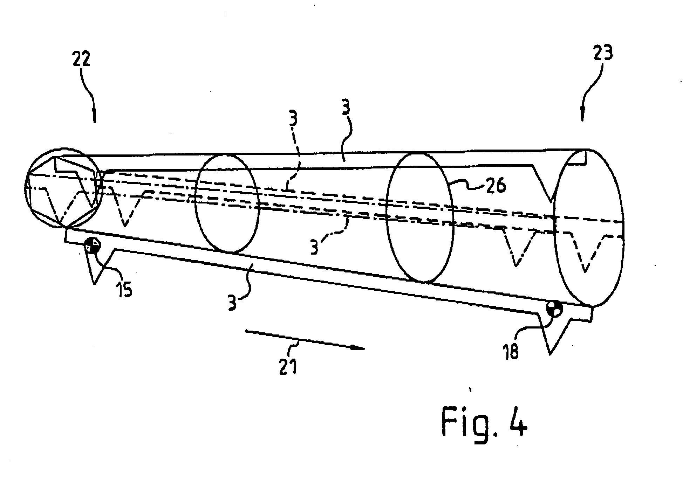

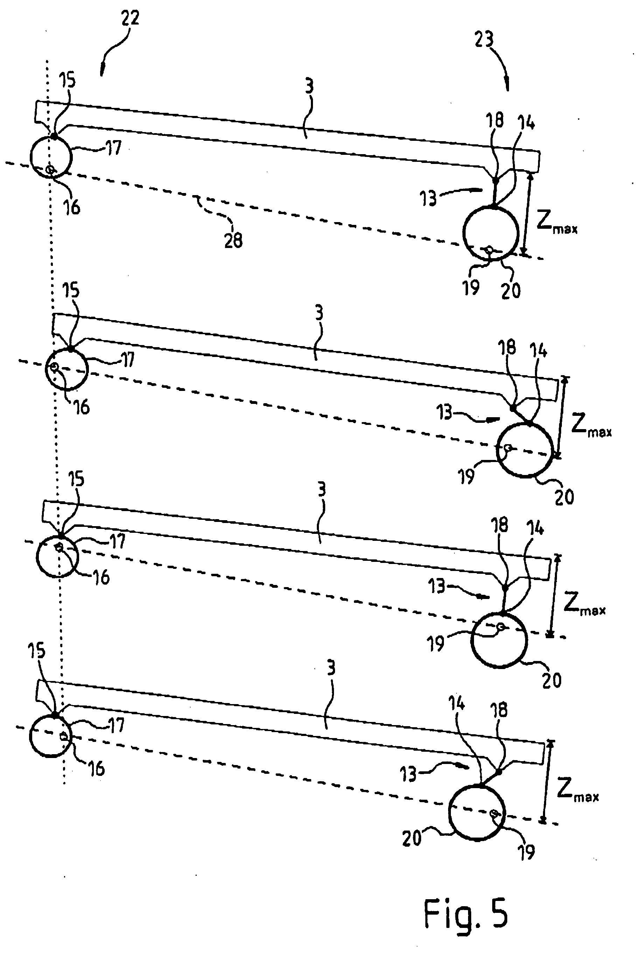

Die Exzenter 7 im Stoff-Ausgabebereich 23 weisen eine gegenüber den Exzentern 6 im Eingabe-Bereich 22 erhöhte Exzentrizität auf. Da die erhöhte Exzentrizität zu einer erhöhten Hubbewegung und einer damit verbundenen erhöhten Bewegungsstrecke führt, ist eine direkte Ankopplung an das jeweilige Förderelement 3 technisch nicht möglich. Durch die Anordnung des Hebelgelenks zwischen dem Förderelement 3 und dem Exzenterlager 12 ist ein Parallelversatz der Anlenkpunkte ausführbar. Dies wird in der Beschreibung der Figuren 4 und 5 näher erläutert.

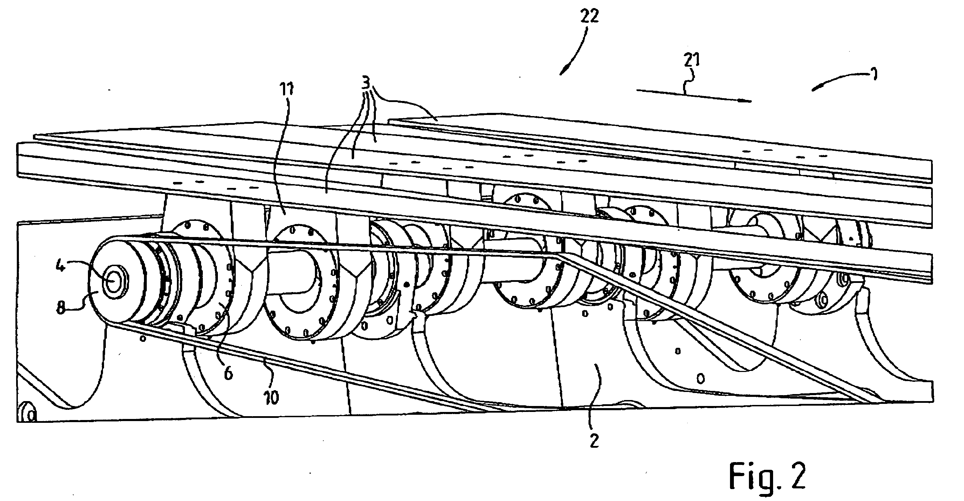

In Figur 2 ist ein Ausschnitt des Eingabebereichs 22 einer Ausbreitungs-Vorrichtung 1 entsprechend Figur 1 gezeigt, wobei der Eingabebereich 22 vorliegend eine direkte Anordnung der Exzenterlager 11 an den Förderelementen 3 vorsieht. Unter einer "direkten" Anordnung soll im Sinne der Erfindung eine Anordnung "ohne Zwischenschaltung" eines Hebelgelenkes 13 verstanden werden. In den Exzenterlagern 11 sind die Exzenter 6 drehbar aufgenommen und erlauben dadurch, dass die exzentrische Drehbewegung in eine kreisförmige Bahnbewegung der Förderelemente 3 umgesetzt wird.

Die Exzenterwelle 4 ist im Eingabebereich 22 des Förderelements 3 fest mit dem Exzenter 6 verbunden, welcher wiederum in einem Exzenterlager 11 drehend gelagert ist. Bei einer Drehbewegung der Exzenterwelle 4 führt das Exzenterlager 11 eine kreisförmige Bewegung auf einer Bewegungsbahn aus, die sich um die Exzenterwelle 4 herum bildet.

Das Exzenterlager 11 ist mit dem darüberliegenden Förderelement 3 ebenfalls fest verbunden, wodurch das Förderelement 3 auf der kreisförmigen Bewegungsbahn des Exzenterlagers 11 mitgeführt wird.

Die Exzenterwelle 4 wird mittels einer Zahnriemenscheibe 8 drehend angetrieben, welche von einem im Grundrahmen 2 angeordneten Antrieb über einen Zahnriemen 10 drehend angetrieben wird.

Aufgrund der phasenwinkelversetzten Anordnung der Exzenter 6 auf der Exzenterwelle 4, führen die Förderelemente 3 eine versetzt zueinander ablaufende Bewegung aus, welche nach den aus dem Stand der Technik bekannten Prinzipien Material transportiert.

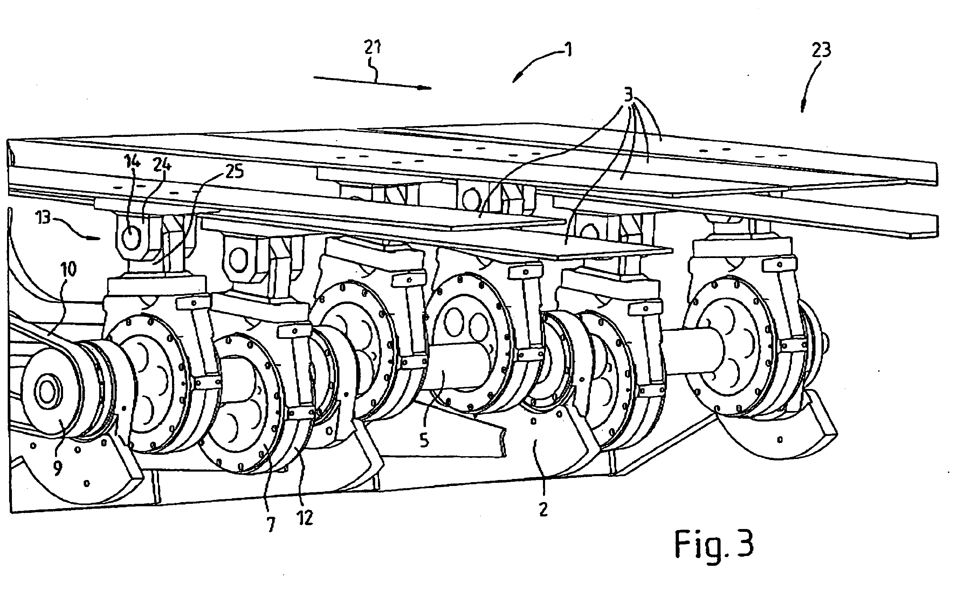

Figur 3 zeigt einen Ausschnitt der Darstellung gemäß Figur 1, wobei zwischen dem jeweiligen Exzenterlager 12 und dem Förderelement 3 ein Hebelgelenk 13 angeordnet ist. Das Hebelgelenk 13 umfasst einen mit dem Förderelement 3 verbundenen ersten Hebelarm 24, einen Anlenkpunkt 14 und einen mit dem Exzenterlager 12 verbundenen, zweiten Hebelarm 25, wodurch das Förderelement 3 im Ausgabebereich 23 der Ausbreitungs-Vorrichtung 1 bei einer Drehbewegung des Exzenters 7 eine Bewegung auf einer ellipsenförmigen Kurvenbahn ausführt. Dies resultiert aus einer gegenüber den Exzentern 6 vergrößerten Exzentrizität der Exzenter 7.

Aufgrund der Bewegungsabläufe auf unterschiedlich ausgebildeten Kurvenbahnen der Förderelemente 3 im Eingabebereich 22 gegenüber dem Ausgabebereich 23 einer Ausbreitungs-Vorrichtung 1 erfährt eine Anhäufung eines Stoffgemisches, ausgehend vom Eingabebereich 22 in Transportrichtung 21 stetig ansteigende Beschleunigungsmomente bzw. Hubhöhen, wodurch die Transportgeschwindigkeit bzw. die oben beschriebene Wurfhöhe bzw. Fallweite stetig zunimmt. Eine Materialanhäufung läuft auf diese Weise auseinander und wird somit ausgebreitet.

Durch die geneigte Anordnung der Ausbreitungs-Vorrichtung (siehe Fig. 1) werden stetig ansteigende Wurfweiten bzw. Fallweiten des schiefen Wurfs bzw. schrägen Falls in Förderrichtung 21 erzielt. Resultierend daraus steigt die Transportgeschwindigkeit der Wertstoffpartikel aufgrund der ansteigenden Wurfweiten bzw. Fallweite in Transportrichtung 21 ebenfalls an und breitet die Anhäufung aus.

In Figur 4 ist eine schematische Darstellung der Bewegungskurven eines Förderelementes 3 in Förderrichtung 21 gezeigt. Das Förderelement 3 weist im Eingabebereich 22 aufgrund der direkten Anordnung des Exzenterlagers 12 am Förderelement 3 einen kreisförmigen Bewegungsablauf mit dem Exzenterhub auf. Dieser Kurvenverlauf 26 wird in Förderrichtung 21 aufgrund des erhöhten Exzenterhubs im Ausgabebereich 23 in eine ellipsenförmige Bewegung überführt. Ermöglicht wird der vergrößerte Hub des an sich starren Förderelementes 3 durch das zwischen Exzenterlager 12 und Förderelement 3 angeordnete Hebelgelenk 13.

In Figur 5 ist eine schematische Darstellung von Momentaufnahmen eines Bewegungsumlaufs bei einem Förderelement 3 dargestellt. Der Exzenter 16 im Eingabebereich 22 weist hierbei eine kleinere Exzentrizität auf, als der Exzenter 20. Der Exzenter 17 dreht um die Exzenterwelle 16. Das Förderelement 3 ist an einem Anlenkpunkt 15 schwenkbar an dem Exzenter 17 bzw. an dessen Exzenterlager befestigt. Auf diese Weise folgt der Hub des Anlenkpunktes 15 und damit des Endes des Förderelements 3 im Eingabebereich 22 einer Kreisbahn.

Am Ende des Förderelementes 3 im Ausgabebereich 23 ist am Exzenter 20 bzw. an dessen Exzenterlager ein erster Anlenkpunkt 14 vorgesehen. Das Hebelgelenk 13 ist über das Zwischengelenk an dem Exzenterlager 11 angelenkt. Ausgehend von einem phasengleichen Umlauf der Exzenter 17, 20 auf den Exzenterwellen 16, 19 sind die beiden Anlenkpunkte 15, 14 in ihrer Bewegung ebenfalls in Phase.

Das Hebelgelenk 13 kompensiert die durch die vergrößerte Exzentrizität bedingte vergrößerte Hubstrecke in Längsrichtung des Förderelements 23 und erlaubt den vergrößerten vertikalhub der Auslenkung Zₘₐₓ 29, wodurch eine erhöhte Wurfbeschleunigung auf die Materialanhäufung erzeugt bzw. eine erhöhte Fallweite für die Materialanhäufung bereitgestellt wird. Für den Ablauf der Bewegung wird auf die Momentaufnahmen der Figur 5 verwiesen.

Aufgrund der unterschiedlichen Bewegungsabläufe einer Kreisbewegung im Eingabebereich 22 und einer elliptischen Bewegung im Ausgabebereich 23 der Ausbreitungs-Vorrichtung 1 erfährt die Anhäufung eines Stoffgemischs aufgrund einer in Förderrichtung 21 stetig ansteigenden Beschleunigung bzw. Fallweite an seinem vorderen Ende einen schnelleren Transport, wie an seinem hinteren Ende und läuft dadurch auseinander.

### Bezugszeichenliste:

- 1: Ausbreitungs-Vorrichtung
- 2: Grundrahmen
- 3: Förderelement
- 4: Exzenterwelle (Eingabebereich)
- 5: Exzenterwelle (Ausgabebereich)
- 6: Exzenter (Eingabebereich)
- 7: Exzenter (Ausgabebereich)
- 8: Riemenscheibe (Eingabebereich)
- 9: Riemenscheibe (Ausgabebereich)
- 10: Zahnriemen
- 11: Exzenterlager (Eingabebereich)
- 12: Exzenterlager (Ausgabebereich)
- 13: Hebelgelenk
- 14: Anlenkpunkt
- 15: Anlenkpunkt (Eingabebereich)
- 16: Exzenterwelle
- 17: Exzenter
- 18: Anlenkpunkt (Förderelement)
- 19: Exzenterwelle
- 20: Exzenter
- 21: Förderrichtung
- 22: Eingabebereich
- 23: Ausgabebereich
- 24: erster Hebelarm
- 25: zweiter Hebelarm
- 26: Kurvenbahn Förderelement
- 27: nicht belegt
- 28: horizontale Ebene
- 29: Auslenkung Zₘₐₓ

## Patentansprüche

1. Ausbreitungs-Vorrichtung (1) für Anhäufungen von Stoffgemischen mit einem Stoff-Eingabebereich (22) und einem Stoff-Ausgabebereich (23), insbesondere für eine Wertstoff-Verarbeitungs-Anlage, umfassend wenigstens zwei nebeneinander angeordnete, längliche Förderelemente (3), welche eine Auflagefläche für eine Anhäufung des Stoffgemisches bilden, wenigstens eine, vorzugsweise zwei darunter angeordnete Exzenterwellen (4,5) mit darauf angeordneten Exzentern (6, 7), welche jeweils in einem Exzenterlager (11, 12) drehend gelagert sind, wobei jedes Exzenterlager (11, 12) mit dem darüber angeordneten Förderelement (3) verbunden ist und wobei die Exzenter (6, 7) in den Exzenterlagern (11, 12) eine Vertikalbeschleunigung in Form einer Auf- und Abwärtsbewegung sowie einen Horizontalversatz in Form einer Hin- und Herbewegung der Fördermittel (3) erzeugen, **dadurch gekennzeichnet, dass** die Exzenter (6,7) unterschiedliche Exzentrizitäten aufweisen und zwischen mindestens einem Exzenterlager (11, 12) und dem damit verbundenen Förderelement (3) zusätzlich ein Hebelgelenk (13) zur Kompensation der durch die vergrößerte Exzentrizität bedingten vergrößerten Hubstrecke angeordnet ist.

2. Ausbreitungs-Vorrichtung (1) nach Anspruch 1, **dadurch gekennzeichnet, dass** das Hebelgelenk (13) als Hebelgelenk mit einem oberen, an dem Förderelement (3) angeordneten ersten Hebelarm (24), einem Zwischengelenk und einem an dem Exzenterlager (12) angelenkten oder befestigten unteren, zweiten Hebelarm (25) ausgebildet ist.

3. Ausbreitungs-Vorrichtung (1) nach einem der vorhergehenden Ansprüche, **dadurch gekennzeichnet, dass** ein Anlenkpunkt (16) des Hebelgelenkes (13) am Förderelement (3) angeordnet ist und einen ellipsenförmigen Bewegungsverlauf ausführt.

4. Ausbreitungs-Vorrichtung (1) nach einem der vorhergehenden Ansprüche, **dadurch gekennzeichnet, dass** bei einer Anordnung von zwei Exzenterwellen (4, 5) die darauf angeordneten Exzenter (6, 7) einen phasengleichen Drehbewegungsverlauf aufweisen.

5. Ausbreitungs-Vorrichtung (1) nach einem der vorhergehenden Ansprüche, **dadurch gekennzeichnet, dass** bei der Anordnung von zwei Exzenterwellen (6, 7) diese eine gleiche Phasenwinkelgeschwindigkeit aufweisen.

6. Ausbreitungs-Vorrichtung (1) nach einem der vorhergehenden Ansprüche, **dadurch gekennzeichnet, dass** im Stoff-Ausgabebereich (23) durch die Förderelemente (3) ein gegenüber dem Stoff-Eingabebereich (22) vergrößerter Vertikalhub ausgeführt wird, welcher auf das Stoffgemisch eine gegenüber dem Stoff-Eingabebereich (22) erhöhte Vertikalbeschleunigung ausübt bzw. eine erhöhte Fallweite bereitstellt.

7. Ausbreitungs-Vorrichtung (1) nach einem der vorhergehenden Ansprüche, **dadurch gekennzeichnet, dass** der Vertikalhub im Stoff-Eingabebereich (22) gegenüber dem Vertikalhub im Stoff-Ausgabebereich (23) ein Verhältnis von mindestens 1:2 aufweist.

8. Ausbreitungs-Vorrichtung (1) nach einem der vorhergehenden Ansprüche, **dadurch gekennzeichnet, dass** die Förderelemente (3) gegenüber einer horizontalen Ebene (28) geneigt sind.

9. Ausbreitungs-Vorrichtung (1) nach einem der vorhergehenden Ansprüche, **dadurch gekennzeichnet, dass** das Förderelement (3) eine gekrümmte Auflagefläche und/oder Durchtrittsöffnungen als Sieb für Kleinpartikel bzw. Flüssigkeiten aufweist.

10. Ausbreitungs-Vorrichtung (1) nach einem der vorhergehenden Ansprüche, **dadurch gekennzeichnet, dass** das Förderelement (3) einseitig auf einer Wippe gelagert ist.

11. Ausbreitungs-Vorrichtung (1) nach einem der vorhergehenden Ansprüche, **dadurch gekennzeichnet, dass** die Exzenterwellen (4, 5) mittels eines gemeinsamen Antriebes oder mittels eines Antriebes je Exzenterwelle (4, 5) angetrieben werden.

## Claims

1. A spreading device (1) for accumulations of material mixtures having a material input area (22) and a material output area (23), in particular for a recyclable material recycling plant, comprising at least two elongated conveyor elements (3) arranged next to each other, which form a support surface for an accumulation of material mixtures, at least one, preferably two eccentric shafts (4, 5) arranged under it with eccentrics (6, 7) arranged thereon, which in each case are mounted in a rotating manner in an eccentric bearing (11, 12), wherein each eccentric bearing (11, 12) is connected with the conveyor element (3) arranged above it and wherein the eccentrics (6, 7) in the eccentric bearings (11, 12) generate a vertical acceleration in the form of an up- and down movement as well as a horizontal offset in the form of a back and forth movement of the means of conveyance (3), **characterized in that** the eccentrics (6, 7) have different eccentricities and in addition between at least one eccentric bearing (11, 12) and the conveyor element (3) connected with it a lever joint (13) is arranged to compensate for the enlarged lifting section induced by the enlarged eccentricity.

2. A spreading device (1) according to claim 1, **characterized in that** the lever joint (13) is designed as a lever joint having an upper first lever arm (24) arranged on the conveyor element (3), an intermediate joint and a lower second lever arm (25) hinged or fastened on the eccentric bearing (12).

3. A spreading device (1) according to one of the preceding claims, **characterized in that** a pivot point (16) of the lever joint (13) is arranged on the conveyor element (3) and carries out an elliptical path of motion.

4. A spreading device (1) according to one of the preceding claims, **characterized in that** in the case of an arrangement of two eccentric shafts (4, 5) the eccentrics (6, 7) arranged thereon have an in-phase rotary motion path.

5. A spreading device (1) according to one of the preceding claims, **characterized in that** in the case of the arrangement of two eccentric shafts (6, 7) the latter have an identical phase angular speed.

6. A spreading device (1) according to one of the preceding claims, **characterized in that** a vertical lift enlarged with respect to the material input area (22) is carried out by the conveyor element (3) in the material output area (23), which exercises an increased vertical acceleration with respect to the material input area (22) on the material mixtures or provides an increased drop distance.

7. A spreading device (1) according to one of the preceding claims, **characterized in that** the vertical lift in the material input area (22) has a ratio of at least 1:2 with respect to the vertical lift in the material output area (23).

8. A spreading device (1) according to one of the preceding claims, **characterized in that** the conveyor elements (3) are inclined with respect to a horizontal plane (28).

9. A spreading device (1) according to one of the preceding claims, **characterized in that** the conveyor element (3) has a curved support surface and/or openings as a sieve for small particles or liquids.

10. A spreading device (1) according to one of the preceding claims, **characterized in that** the conveyor element (3) is mounted on one side on a rocker.

11. A spreading device (1) according to one of the preceding claims, **characterized in that** the eccentric shafts (4, 5) are driven by means of a common drive or by means of one drive per eccentric shaft (4, 5).

## Revendications

1. Dispositif d'épandage (1) pour des amas de mélanges de substances avec une partie d'entrée des substances (22) et une partie de sortie des substances (23), plus particulièrement pour une installation de traitement de matières, comprenant au moins deux éléments de convoyage (3) oblongs disposés l'un à côté de l'autre, qui forment une surface d'appui pour un amas du mélange de substances, au moins un, de préférence deux arbres d'excentriques (4, 5) disposés en dessous, avec des excentriques (6, 7) disposés dessus, logés chacun de manière rotative dans un palier d'excentrique (11, 12), chaque palier d'excentrique (11, 12) étant relié avec l'élément de convoyage (3) disposé au-dessus et les excentriques (6, 7) produisant, dans les paliers d'excentriques (11, 12), une accélération verticale sous la forme d'un mouvement de haut en bas ainsi qu'un décalage horizontal sous la forme d'un mouvement de va et vient des éléments de convoyage (3), **caractérisé en ce que** les excentriques (6, 7) présentent des excentricités différentes et, entre au moins un palier d'excentrique (11, 12) et l'élément de convoyage (3) qui y est relié, se trouve en outre une articulation à levier (13) pour la compensation de la course augmentée du fait de l'augmentation de l'excentricité.

2. Dispositif d'épandage (1) selon la revendication 1, **caractérisé en ce que** l'articulation à levier (13) est conçue comme une articulation à levier avec un premier bras de levier supérieur (24) disposé sur l'élément de convoyage (3), une articulation intermédiaire et un deuxième bras de levier inférieur (25) articulé ou fixé au niveau du palier d'excentrique (12).

3. Dispositif d'épandage (1) selon l'une des revendications précédentes, **caractérisé en ce qu'**un point d'articulation (16) de l'articulation à levier (13) est disposé sur l'élément de convoyage (3) et effectue un mouvement de forme elliptique.

4. Dispositif d'épandage (1) selon l'une des revendications précédentes, **caractérisé en ce que**, dans le cas d'une disposition de deux arbres d'excentriques (4, 5), les excentriques (6, 7) disposés dessus présentent un mouvement rotatif synchrone.

5. Dispositif d'épandage (1) selon l'une des revendications précédentes, **caractérisé en ce que**, dans le cas d'une disposition de deux arbres d'excentriques (6, 7), ceux-ci présentent une même vitesse angulaire de phase.

6. Dispositif d'épandage (1) selon l'une des revendications précédentes, **caractérisé en ce que**, dans la partie de sortie des substances (23), une course verticale augmentée par rapport à la partie d'entrée des substances (22) est effectuée par les éléments de convoyage (3), qui produit une accélération verticale augmentée par rapport à la partie d'entrée des substances (22) et/ou une hauteur de chute du mélange de substances augmentée.

7. Dispositif d'épandage (1) selon l'une des revendications précédentes, **caractérisé en ce que** la course verticale dans la partie d'entrée des substances (22) présente, par rapport à la course verticale dans la partie de sortie des substances (23), un rapport d'au moins 1:2.

8. Dispositif d'épandage (1) selon l'une des revendications précédentes, **caractérisé en ce que** les éléments de convoyage (3) sont inclinés par rapport à un plan horizontal (28).

9. Dispositif d'épandage (1) selon l'une des revendications précédentes, **caractérisé en ce que** l'élément de convoyage (3) présente une surface d'appui incurvée et/ou des ouvertures de passage fonctionnant comme un tamis pour les petites particules ou les liquides.

10. Dispositif d'épandage (1) selon l'une des revendications précédentes, **caractérisé en ce que** l'élément de convoyage (3) est logé d'un côté sur une bascule.

11. Dispositif d'épandage (1) selon l'une des revendications précédentes, **caractérisé en ce que** les arbres d'excentriques (4, 5) sont entraînés à l'aide d'un dispositif d'entraînement commun ou à l'aide d'un dispositif d'entraînement pour chaque arbre d'excentrique (4, 5).
